**Europäisches Patentamt**

**European Patent Office**

**Office européen des brevets**

(19)

(11) **EP 1 280 250 A2**

(12) **EUROPEAN PATENT APPLICATION**

(43) Date of publication:
**29.01.2003 Bulletin 2003/05**

(51) Int Cl.⁷: **H02J 3/18**

(21) Application number: **02254985.1**

(22) Date of filing: **16.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventors:<br>• **Thoburn, Richard**<br>  **St. Johns, Newcastle upon Tyne, NE5 1YA (GB)**<br>• **Hill, Jason**<br>  **Gosforth, Newcastle upon Tyne, NE3 3HD (GB)** |
| (30) Priority: **26.07.2001 GB 0118215** | (74) Representative: **Skinner, Michael Paul**<br>**c/o Swindell & Pearson**<br>**48 Friar Gate**<br>**Derby DE1 1GY (GB)** |
| (71) Applicants:<br>• **ROLLS-ROYCE POWER ENGINEERING PLC**<br>  **Derby DE24 8BJ (GB)**<br>• **VA Tech T&D UK Limited**<br>  **Tyne & Wear, NE31 1UP (GB)** | |

(54) **Voltage control**

(57) A dynamic voltage restorer circuit 14 comprises capacitive storage means 16, switch means 18 and control means 20. The switch means 18 includes an array of anti-parallel diodes 34 and switchable uni-directional devices 36. Appropriate control of the switchable devices 36 by a control 20 allows the capacitor 16 to be connected in series into the power line 24a,24b, with either polarity, to inject stored energy into the line, thereby restoring the voltage.

FIG.2

EP 1 280 250 A2

## Description

The present invention relates to voltage control and in particular, to the type of voltage control achieved by a circuit commonly called a "dynamic voltage restorer".

A dynamic voltage restorer circuit is a device used in electrical power distribution systems to provide protection for a load which is sensitive to a drop in the supply voltage. The electrical power distribution can be any connection of electrical generators to any load. Specifically it includes power distribution around aircraft, trains, cars and ships, as well as systems for the supply of electricity to domestic and industrial premises. In the event that the supply voltage drops, the dynamic voltage restorer intervenes to restore the supply voltage to the nominal level. The device is called "dynamic" because of its ability to respond at the time a voltage dip occurs, thereby ensuring a stable supply voltage as seen by the load.

The present invention provides a dynamic voltage restorer circuit for connection in a power line, the circuit comprising capacitive storage means, switch means, and control means operable to detect the voltage of the power line and to control the setting of the switch means in dependence on the result, the switch means being operable selectively either to connect the storage means in series into the power line to restore voltage on the line by providing stored energy to the line, or to connect the power line to bypass the storage means.

Preferably the switch means is operable to connect the storage means with either polarity in series into the power line. Preferably the switch means comprises pairs of uni-directional current conductors in anti-parallel arrangement, each pair comprising at least one switchable device. The switchable device is preferably in anti-parallel with a non-switchable device.

The switch means may comprise a first pair of devices in which the switchable device has a conduction direction from the positive terminal of the capacitive storage means to the input from the power line. A second pair of devices may have the switchable device with a conduction direction from the input from the power line to the negative terminal of the storage means. A third pair of devices may have the switchable device with a conduction direction from the positive terminal of the storage means to the output to the power line. A fourth pair of devices may have the switchable device with a conduction direction from the output to the power line to the negative terminal of the storage means.

Preferably the control means is operable to connect and disconnect the storage means cyclically into the power line when voltage restoring is required. Preferably the connection cycle frequency is much greater than the supply frequency on the power line. Preferably the connection cycle frequency is at least 1,000 times and preferably 10,000 or 20,000 times per second. Preferably the control means is operable to determine a mark-space ratio for connection of the storage means to cause sufficient energy to be provided to the line from the storage means to restore the power line voltage.

Preferably the circuit is associated with filter means connected to the power line downstream of the switch means.

Preferably the circuit comprises multiple modules, each as aforesaid, and connected in series along the power line, whereby the storage means of one or more modules can be used, according to the amount of energy required to be provided to the power line.

Preferably the or each capacitive storage means is charged from the power line when the power line voltage is correct. The or each capacitive storage means may be charged in series from the power line by connection to the power line upstream or downstream of the restoring circuit and preferably by means of a voltage regulator circuit.

Embodiments of the present invention will now be described in more detail, by way of example only, and with reference to the accompanying drawings, in which:

Fig. 1 illustrates a complete cycle of power line voltage, indicating when voltage restoring is required;
Fig. 2 is a schematic diagram of a dynamic voltage restorer circuit according to the present invention, connected into a power line;
Fig. 3 illustrates the energy pulses provided by the circuit of Fig. 2, during operation to restore voltage;
Fig. 4 illustrates how the operation of the circuit restores a voltage on the power line; and
Figs. 5A and 5B illustrate an algorithm for controlling the circuit.

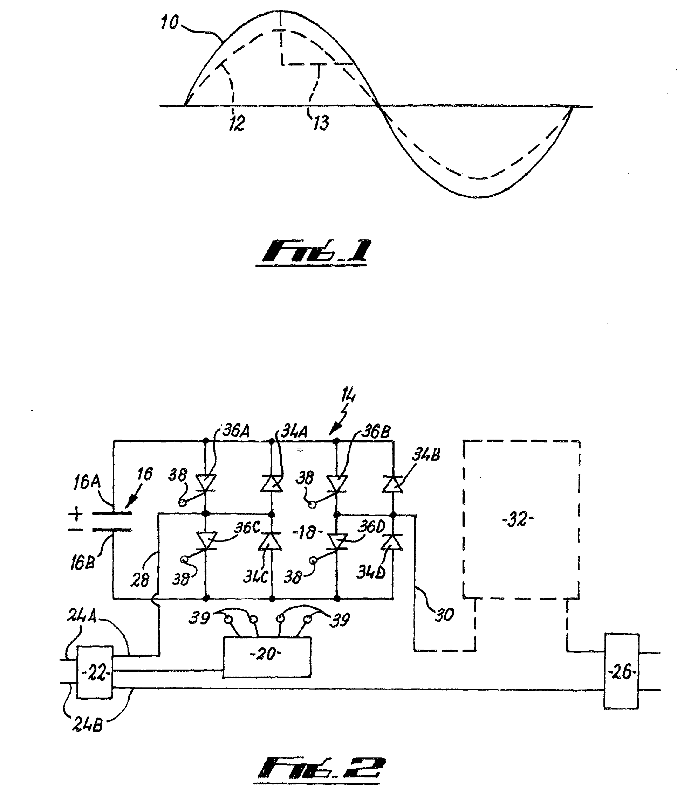

Fig. 1 shows a complete cycle of a sinusoidal supply voltage 10 in an electrical power distribution system. The solid line 10 illustrates the nominal supply voltage $V_n$. However, problems with supply arrangements can sometimes cause the supply voltage to "sag", dropping to a sinusoidal form indicated in broken lines at 12. The sagged voltage 12 has the same frequency as the nominal voltage 10, but reduced amplitude. Alternatively, the nominal voltage 10 may become distorted, as indicated at 13. It is the purpose of a dynamic voltage restorer (DVR) to restore the sagged or distorted voltage 12 or 13 to the nominal voltage 10.

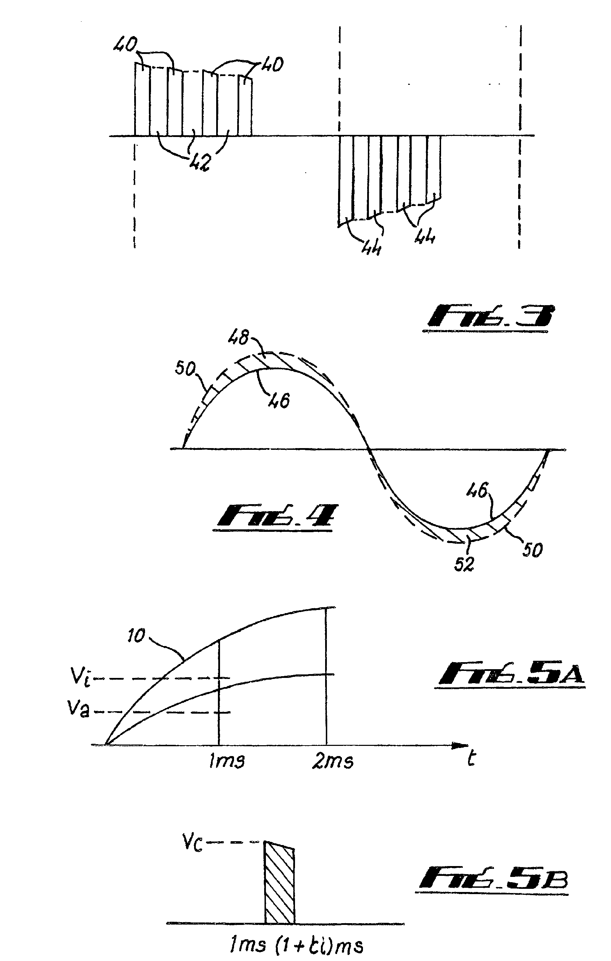

Fig. 2 shows apparatus in accordance with the invention, which forms a dynamic voltage restorer. The circuit illustrated generally at 14 comprises capacitive storage means 16, switch means 18 and control means 20. The storage means 16 will be referred to as a capacitor, but any capacitive device, or bank of devices, could be used. The control means 20 controls the state of the switches 18 and is associated with a sensor 22 to sense the supply voltage. The control means 20 can control the switches 18 either to bypass the capacitor 16 (when the supply voltage is at the nominal level 10, or to connect the capacitor 16 in series when the voltage has sagged, so that the capacitor 16 can provide stored energy to restore the voltage.

In more detail, the power line 24 first passes through a voltage sensor of any conventional type capable of responding sufficiently quickly to any change in the supply voltage to meet the requirements which will become apparent from the following description. One line 24B of the power line then passes directly to a filter 26, while the other line 24A forms an input at 28 to the switching arrangement 18. The switch means 18 provides an output at 30 which passes either direct to the filter 26, or through another similar switch arrangement 32, for purposes to be described. When employed on a delta-connected three-phase system there would be three similar units 14, one connected in each phase, with the filters 26 connected between each phase.

Within the switch means 18, there are a total of eight uni-directional devices which provide connections from the input 28 to the output 30. Four of these devices are diodes. The other four devices are switch devices which can be turned on and off, such as thyristors with suitable commutation circuits, gate turn-off thyristors, bipolar transistors, field effect transistors, IGBT or MCT devices, etc. These devices 36 all have the property that they can be switched off (non-conducting) or on to act as a uni-directional device, by means of a control signal applied at a control terminal 38 by the control means 20. The control terminals 38 are connected to outputs 39 of the control means 20, but those connections are not shown in Fig. 2, in the interests of clarity.

It can readily be seen that the devices 34,36 are arranged in pairs. A first diode 34A is connected in the forward direction from the input 28 to the positive side 16A of the capacitor 16. A first device 36A is connected in anti-parallel with the device 34A. That is, the device 36A is connected in the forward (conduction) direction from the positive terminal 16A of the capacitor 16, to the input 28. Thus, the device 34A can conduct from the input 28 to the capacitor positive terminal 16A. The device 36A (when turned on) can conduct from the capacitor positive terminal 16A to the input 28.

The diode 34B and device 36B are similarly connected between the positive terminal 16A of the capacitor 16, and the output 30. That is, the forward (conducting) direction of the diode 34B is from the output 30 to the capacitor 16. The forward (conducting) direction of the device 36B is from the capacitor 16 to the output 30.

A third pair of devices 34C,36C are connected between the input 28 and the negative terminal 16B of the capacitor 16, but in the reverse sense in comparison with the devices 34A,36A. That is, the forward (conducting) direction of the diode 34C is from the capacitor to the input 28. The forward (conducting) direction of the device 36C is from the input 28 to the capacitor 16.

A fourth pair of devices 34D,36D are connected between the output 30 and the negative terminal 16B of the capacitor 16, with the forward (conducting) direction of the diode 34D being from the capacitor 16 to the output 30, and the forward (conducting) direction of the device 36D being from the output 30 to the capacitor 16.

Having described the circuit of the switch means 18, the manner of operation can now be described. It is convenient first to consider the situation when the supply voltage is at the nominal value 10, so that the dynamic voltage restorer is not required to be active. When this situation is sensed by the sensor 22, the control means 20 turns on the devices 36A and 36B. During the positive half cycle of current, the input 28 is connected to the output 30 through the forward biased diode 34A and the forward biased device 36B. During the negative half cycle of current, the input 28 and output 30 remain connected, through the forward biased diode 34B, and forward biased device 36A. Consequently, the input and output are directly connected through the device, with the capacitor 16 being bypassed.

In the situation just described, the diodes 34C and 34D, and the devices 36C and 36D play no part, because the devices 36C,D are kept switched off by the control means 20. (Alternatively, the control means 20 could switch on the devices 36C,36D, and switch off the devices 36A,36B, in which case direct connection from the input 28 to the output 30 is then maintained through the diodes 34C,D and the devices 36C,D, otherwise in the manner previously described).

If the sensor 22 detects that the supply voltage has sagged, the control means 20 can then commence operation in a different manner in order to connect the capacitor 16 into the line 24, in series between the input 28 and output 30, as follows.

First, the control means 20 will turn on the devices 36B and 36C during the positive half cycle of voltage. This connects the negative terminal 16B of the capacitor 16 to the input 28 (through the device 36C), and connects the output 30 to the positive terminal 16A of the capacitor 16 (through the device 36B). While connected in series in this way, the capacitor 16 can discharge through the output 30, providing energy into the power line 24.

The voltage differential created in this way between the output 30 and the input 28 would decay as the capacitor 16 begins to discharge. Moreover, the differential may be greater than the amount by which the voltage has sagged. The differential achieved will depend on the charge state of the capacitor when the correction stage begins. Consequently, the control means 20 does not merely turn on the devices 36B,36C and leave them turned on throughout the positive half cycle. Rather, the devices 36B,36C will be pulsed on and off throughout the positive half cycle, thus injecting pulses of energy from the capacitor 16, throughout the half cycle. These pulses 40 are illustrated in Fig. 3, which illustrates the voltage differential being applied between the output 30 and input 28, or equivalently, the charge state of the capacitor. Each pulse decays as the capacitor 16 discharges. Adjacent pulses are separated by a time gap 42 in which the switch means 18 is operated in the manner described above, when the voltage restorer is not required to be active.

The energy injected into the line 24 can be calculated by considering the time integral of the wave form illustrated in Fig. 3. The control means 20 will continue to inject pulses of energy into the wave form until sufficient energy has been injected to restore the supply voltage to the nominal level 10. It will be readily apparent that after injecting pulses in this manner, the output at 30 will no longer be sinusoidal, but the required energy content will have been restored. The purpose of the filter 26 is to restore a sinusoidal wave form.

Filtering is made easier by having a pulse frequency for the pulses 40, which is very much higher than the supply voltage frequency. For instance, the supply voltage frequency will often be in the region of 50Hz or 60Hz. The frequency of the pulses 40 can be at 1kHz or above, as previously discussed. The result is that spurious frequencies injected by the operation of the device are well separated (in the frequency domain) from the supply voltage frequency and can thus readily be filtered out.

At the end of the positive half cycle of voltage, the control means 20 switches off the devices 36B,36C and turns on the devices 36A,36D. Again, this is a pulsed operation and has the effect of connecting the capacitor 16 with reversed polarity between the input 28 and output 30. That is, the output 30 is connected to the negative terminal 16B of the capacitor 16, through the device 36d, while the positive terminal 16A of the capacitor 16 is connected to the input 28, through the device 36A. Thus, taking into account that the half cycle is now negative, the capacitor 16 will inject energy into the power line to increase the amplitude of the supply voltage (by establishing a negative voltage differential between the input 28 and the output 30).

The devices 36A,36D are pulsed for the same reason as described above in relation to the positive half cycle and in order to inject negative voltage pulses 44, shown in Fig. 3.

The result can be seen in Fig. 4. The actual (sagged) supply voltage at the input 28 is shown in solid lines 46. An area 48 is shown shaded above the positive half cycle and represents the additional energy injected from the capacitor 16 to restore the voltage to a higher amplitude indicated by a broken line profile 50, at the amplitude of the nominal supply voltage 10 (Fig. 1). Similarly, an area 52 shown shaded below the negative half cycle represents the additional energy injected from the capacitor 16 during the negative half cycle, to restore the sagged voltage 46 to the nominal voltage 50.

In order to control the various switching devices, the control means 20 operates according to an algorithm which calculates the required mark-space ratio for the pulses 40,44, to inject the necessary amount of energy to restore the sagged voltage 12. These calculations must be executed swiftly and the control means 20 is preferably microprocessor based. The algorithm on which the control means 20 is based will take into account the amount by which the voltage has sagged, the charge state of the capacitor 16 at the time (which is measured), and the switching frequency of the active devices. The precise details of the algorithm will vary widely according to the voltages involved, the nature of devices used in the implementation of the invention, and the accuracy required in the voltage restoration.

The operation of one example of such an algorithm is illustrated in Figs. 5A and 5B. In this example, consider that the switch devices in the circuit are able to be switched at a frequency of 1kHz, so that the duration of one switching cycle is one thousandth of a second.

In Fig. 5A, the first 2ms of a cycle of the ideal voltage 10 are shown. During the first millisecond, the voltage 10 will have the illustrated mean value $V_i$. Now suppose that the actual voltage in the first millisecond is lower than the ideal voltage, at a mean value of $V_a$. The sensor 22 measures $V_a$ in the first millisecond and compares the result with $V_i$. The voltage across the capacitor 16 is also measured at the same time.

Having sensed that $V_a$ is less than $V_i$, the sensor can calculate the length of a pulse, at the capacitor voltage, required to inject the energy missing from the actual waveform. The calculation equates the product of the difference between $V_a$ and $V_i$, and the switching duration (1ms) with the product of the capacitor voltage ($V_i$) at the required length of the injection pulse ($t_i$); i.e.

$$(V_i - V_a)\,(\text{l}ms) = V_c t_i$$

and therefore

$$t_i = \frac{(V_i - V_a)(\text{l}ms)}{V_c}$$

The capacitor is then connected in series into the power supply, for a period $t_i$ to inject a pulse (shown in Fig. 5B).

This process is repeated during each 1ms time period. As a result, energy is re-injected immediately after the actual supply varies from the ideal, i.e. dynamically. The pulse is injected (in this example) in the millisecond following the millisecond in which the energy was missing from the supply and thus the output of the DVR lags the supply voltage by one switching duration. Accordingly, the operation of the DVR becomes more accurate as the switching duration is reduced by faster switching.

In order for the capacitor 16 to inject energy into the supply line, the capacitor 16 must have been charged. This can be achieved in a number of different ways. In one preferred arrangement, a transformer can be connected into the power line 24 to provide charging current to the capacitor 16 when the capacitor 16 is not being used for energy injection. If the charging transformer is upstream of the device (in the input line 28), the charging current should preferably be regulated by the control means 20 in accordance with the output of the sensor 22 to ensure that the capacitor 16 is maintained at a known charge state regardless of any sagging of the voltage. The capacitor 16 can be more readily charged if the charging transformer is connected downstream of the device (in the output 30) so that charging current is drawn from the restored voltage, so that the charging condition of the capacitor 16 can more readily be determined.

In some circumstances, it may be found that the requirement for energy injection may surpass the capacity of the capacitor 16 to provide this. In that situation, the invention can be readily extended by adding additional circuits of the type described above, as additional modules. One such further module 32 is indicated in broken lines in Fig. 2. The module is constructed in exactly the same manner as the module described in detail above, with the input to the module 32 connected to the output from the first module 18, and the output of the module 30 being connected to the filter 26, as described above. The switch devices within the module 32 are again controlled by the control means 20. Various modes of operation are then possible. When the line 24 is at the nominal supply voltage, both modules can be set to provide direct connection from their input to their output, bypassing the corresponding capacitor. When the voltage is detected to have sagged, one or other module can be operated in the manner described above, to inject energy into the line 24, to restore the voltage. If the control means 20 determines that the capacitor being used will have discharged excessively, that capacitor can then be bypassed, and the capacitor of the next module can be brought into operation to inject energy. In principle, any number of modules can be connected in series and used in this manner. In cases of particularly serious voltage sag, more than one module can be in use simultaneously (to connect the corresponding capacitors in series with one another in the line 24) to allow larger energy pulses to be produced.

In a further example, the capacitor 16 can be charged through the diodes 34A,B,C,D, which will form a bridge rectifier, when the devices 36 are turned off, thus allowing the capacitor 16 to be charged directly from the distribution line. Any of these charging methods must take into account that the DC voltage provided by the capacitor will decrease as the capacitor discharges.

Other circuitry may be required in addition to that shown in the accompanying drawings, for ancillary purposes such as voltage suppression, over-current detection, harmonic filtering, charging of DC capacitor banks, and the like.

It can be appreciated from the above description that the devices described can operate by direct injection of energy into the power line by series connection of the capacitors, without requiring energy injection via a transformer connected in series with the power line. This reduces energy loss and thus improves efficiency and accuracy of voltage restoring.

Devices in accordance with the present invention are used to inject energy into the power lines of electrical distribution systems. These systems may be used in transport applications, to distribute electrical power around aircraft, trains, cars and ships or to supply electricity to domestic and industrial premises.

Many variations and modifications can be made to the apparatus described above, without departing from the scope of the present invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A dynamic voltage restorer circuit (14) for connection in a power line (24), the circuit comprising capacitive storage means (16), switch means (18), and control means (20) operable to detect the voltage of the power line and to control the setting of the switch means in dependence on the result, the switch means being operable selectively either to connect the storage means in series into the power line to restore voltage on the line by providing stored energy to the line, or to connect the power line to bypass the storage means.

2. A circuit (14) according to claim 1, **characterised in that** the switch means (18) is operable to connect the storage means (16) with either polarity in series into the power line (24).

3. A circuit (14) according to claim 1 or 2, **characterised in that** the switch means (18) comprises pairs of uni-directional current conductors (34,36) in anti-parallel arrangement, each pair comprising at least one switchable device (36A,36B,36C,36D).

4. A circuit (14) according to claim 3, **characterised in that** each pair (34,36) comprises a switchable device (36A,36B,36C,36D) in anti-parallel with a non-switchable device (34A,34B,34C,34D).

5. A circuit (14) according to claim 3 or 4, **characterised in that** the switch means (18) comprises a first pair of devices (34A,36A) in which the switchable device (36A) has a conduction direction from the positive terminal (16A) of the capacitive storage means (16) to the input (24A) from the power line (24).

6. A circuit (14) according to claim 3, 4 or 5, **characterised in that** a second pair of devices (34C,36C) has the switchable device (36C) with a conduction direction from the input (24A) from the power line to the negative terminal (16B) of the storage means (16).

7. A circuit (14) according to any of claims 3 to 6, **characterised in that** a third pair of devices (34B,36B) has the switchable device (36B) with a conduction direction from the positive terminal (16A) of the storage means (16) to the output (30) to the power line (24).

8. A circuit (14) according to any of claims 3 to 7, **characterised in that** a fourth pair of devices (34D,36D) has the switchable device (36D) with a conduction direction from the output (30) to the power line to the negative terminal (16B) of the storage means (16).

9. A circuit (14) according to any preceding claim, **characterised in that** the control means (20) is operable to connect and disconnect the storage means (16) cyclically into the power line (24) when voltage restoring is required.

10. A circuit (14) according to claim 9, **characterised in that** the connection cycle frequency is much greater than the supply frequency on the power line.

11. A circuit (14) according to claim 10, **characterised in that** the connection cycle frequency is at least 1,000 times and preferably 10,000 or 20,000 times per second.

12. A circuit (14) according to any of claims 9 to 11, **characterised in that** the control means (20) is operable to determine a mark-space ratio for connection of the storage means (16) to cause sufficient energy to be provided to the line (24) from the storage means to restore the power line voltage.

13. A circuit (14) according to any preceding claim, **characterised in that** the circuit is associated with filter means (26) connected to the power line (24) downstream of the switch means (18).

14. A circuit (14) according to any preceding claim, **characterised in that** the circuit comprises multiple modules (18,32), each as aforesaid, and connected in series along the power line (24), whereby the storage means (16) of one or more modules can be used, according to the amount of energy required to be provided to the power line.

15. A circuit (14) according to any preceding claim, **characterised in that** the or each capacitive storage means (16) is charged from the power line (24) when the power line voltage is correct.

16. A circuit (14) according to any preceding claim, **characterised in that** the or each capacitive storage means (16) is chargeable in series from the power line (24) by connection to the power line upstream or downstream of the restorer circuit.

17. A circuit (14) according to claim 16, **characterised in that** charging is by means of a voltage regulator circuit (20).

18. A power distribution system (24) for use in transport applications, **characterised by** including a circuit (14) as claimed in any of claims 1-17.

19. A power distribution system (24) for use with land based utilities, **characterised by** including a circuit (14) as claimed in any of claims 1-17.

20. Any novel subject matter or combination including novel subject matter disclosed herein, whether or not within the scope of or relating to the same invention as any of the preceding claims.

**Fig.1**

**Fig.2**

*Fig.3*

*Fig.4*

*Fig.5A*

*Fig.5B*

8